# NEUE EUROPÄISCHE PATENTSCHRIFT

(11) **EP 0 529 131 B2**
(45) Veröffentlichungstag und Bekanntmachung des Hinweises auf die Entscheidung über den Einspruch: **11.07.2001**
(45) Hinweis auf die Patenterteilung: 25.10.1995
(21) Anmeldenummer: 91114557.1
(22) Anmeldetag: 29.08.1991
(51) Int. Cl.: G01P 3/481

(54) **Drehzahlerfassungsvorrichtung für einen Gleichstrommotor**
Rotational speed measurement apparatus for DC motor
Dispositif de mesure de la vitesse de rotation pour moteur à courant continu

(43) Veröffentlichungstag der Anmeldung: 03.03.1993
(73) Patentinhaber: SIEMENS AKTIENGESELLSCHAFT, 80333 München (DE)
(72) Erfinder: Pieczkowski, Peter, Dipl.-Ing.(FH), D-8700 Würzburg 25 (DE)

(56) Entgegenhaltungen:
- EP-A- 0 030 997
- EP-A- 0 307 709
- DE-A- 2 030 457
- DE-A- 2 638 954
- DE-U- 8 712 360
- FR-A- 2 095 378
- US-A- 4 495 448
- Duncan, T.,"Physics: A textbook for advanced level students", 1982, John Murray Ltd.,London, GB
- Brophy, J.J., "Basic Electronics for Scientists - 2nd Edition", 1966, MCGRAW-HILL, Tokyo, JP
- Tietze, Schenk, "Halbleiter-Schaltungstechnik - 5. Auflage", 1980, Springer Verlag, Berlin, DE
- Schrüfer, E., "Elektrische Messtechnik - 2. Auflage", 1984, Hanser-Verlag, München, DE

## Beschreibung

Die Erfindung bezieht sich auf eine Drehzahlerfassungsvorrichtung für einen Gleichstrommotor gemäß Oberbegriff des Anspruchs 1; eine derartige Drehzahlerfassungsvorrichtung ist durch die EP-B1-0 307 709 bekannt.

Bei der durch die EP-B1-0 307 709 bekannten Drehzahlerfassungsvorrichtung für einen permanentmagnetisch erregten Gleichstrom-Kleinmotor mit über den Bohrungsumfang des Stators unter Freilassung von Pollücken an der Innenumfangsfläche eines Statorgehäuses verteilten Magnetsegmenten istdie Meßspule Teil eines Kunststoff-Tragkörpers, der zwischen den Magnetsegmenten im Inneren des Motorgehäuses gehalten wird.

Gemäß Aufgabe vorliegender Erfindung soll eine sichere Orehzahlerfassung auch bei sehr geringen und/oder durch höherfrequente Störfrequenzen überlagerten Streufeldpulsationen gewährleistet werden können; die Lösung dieser Aufgabe gelingt bei einer Drehzahlerfassungvorrichtung der eingangs genannten Art durch die Lehre des Anspruchs 1. Vorteilhafte Ausgestaltungen der Erfindung sind jeweils Gegenstand der abhängigen Ansprüche.

Die erfindungsgemäße Drehzahlerfassungsvorrichtung erlaubt auf einfache Weise durch die Abstimmung des Stimmkreises auf die zu messende Drehfrequenz des Motors eine Ausfilterung des die Drehzahl des Motors enthaltenden Frequenzspektrums, das durch den anschließenden Operationsverstärker bei gleichzeitiger Ausfilterung hochfrequenter Störimpulse, insbesondere aufgrund eines Kommutatorfeuers des Gleichstrommotors, die Verstärkung des die Drehfrequenz repräsentierenden Nutzsignals ermöglicht; nach einer vorteilhaften Ausgestaltung der Erfindung ist dementsprechend vorgesehen, die Meßspule und somit die Erfassung der nutfrequenten Pulsation des Streufeldes am bzw. in der Nähe des Außenumfangs des Motorgehäuses des Gleichstrommotors - vorzugsweise in Nähe der statorseitigen Polkanten - vorzusehen, derart daß durch die erfindungsgemäße Drehzahlerfassungsvorrichtung bereits fertig montierte und gegebenenfalls nicht mit eigenem Drehzahlgeber ausgestattete Gleichstrommotoren hinsichtlich ihres Drehzahlverhaltens überprüft oder gesteuert und geregelt werden können.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: einen radialen Querschnitt durch einen permanentmagnetisch erregten Gleichstrom-Kleinmotor;
- FIG 2: eine radiale Draufsicht auf den die Meßspule aufnehmenden Kunststoff-Tragkörper in Richtung II gemäß FIG 1.
- FIG 3: in Alternative zu FIG 1 die Anordnung der Meßspule in einem außerhalb des Gleichstrom-Kleinmotors gehaltenem Kunststoff-Tragkörper.
- FIG 4: das Blockschaltbild der erfindungsgemäßen Drehzahlauswertungsvorrichtung.
- FIG 5: das Verstärkungsdiagramm des in FIG 4 vorgesehenen Operationsverstärkers.

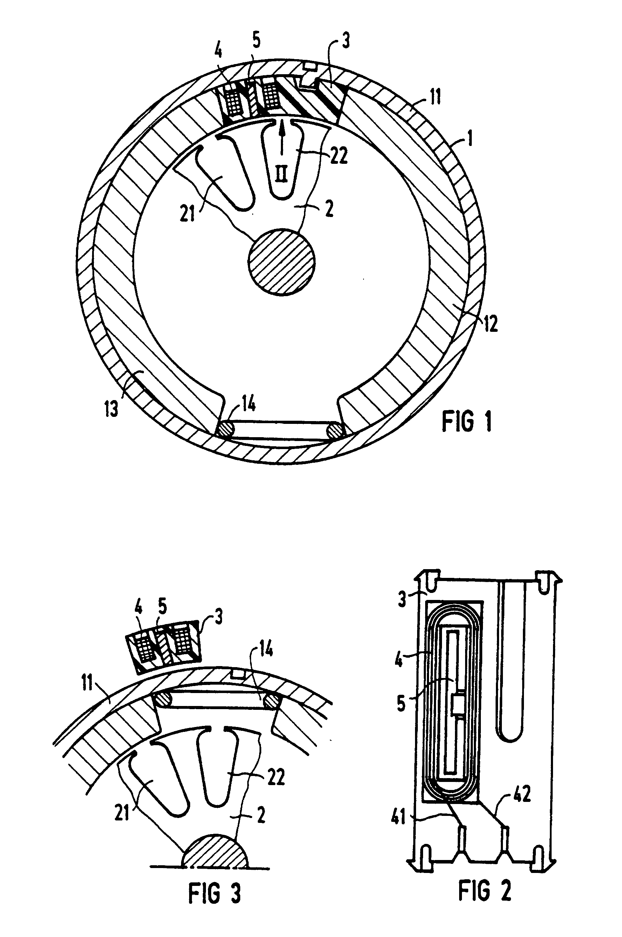

FIG 1 zeigt einen permanentmagnetisch erregten Gleichstrom-Kleinmotor 1 mit zwei, unter tangentialem stirnseitigen Abstand an der Innenumfangsfläche eines Statorgehäuses 11 gehaltenen Magnetsegmenten 12,13 und einem hier noch unbewickelt dargestellten Rotor 2, der über seinen Umfang mit Nuten, von denen im Teilausschnitt nur zwei Nuten 21,22 gezeigt sind, und zwischen den Nuten liegenden Rotorzähnen versehen ist. Die Magnetsegmente 12,13 sind in FIG 1 an ihren unteren Stirnseiten mittels einer zwischenliegenden Steckfeder 14 an die Innenumfangsfläche des Statorgehäuses 11 angedrückt; zwischen den beiden oberen Stirnseiten der Magnetsegmente 12,13 ist ein Kunststoff-Tragkörper 3 eingedrückt, der eine Meßspule 4 und einen von dieser umschlungenen Induktions-Eisenkern 5 aufnimmt.

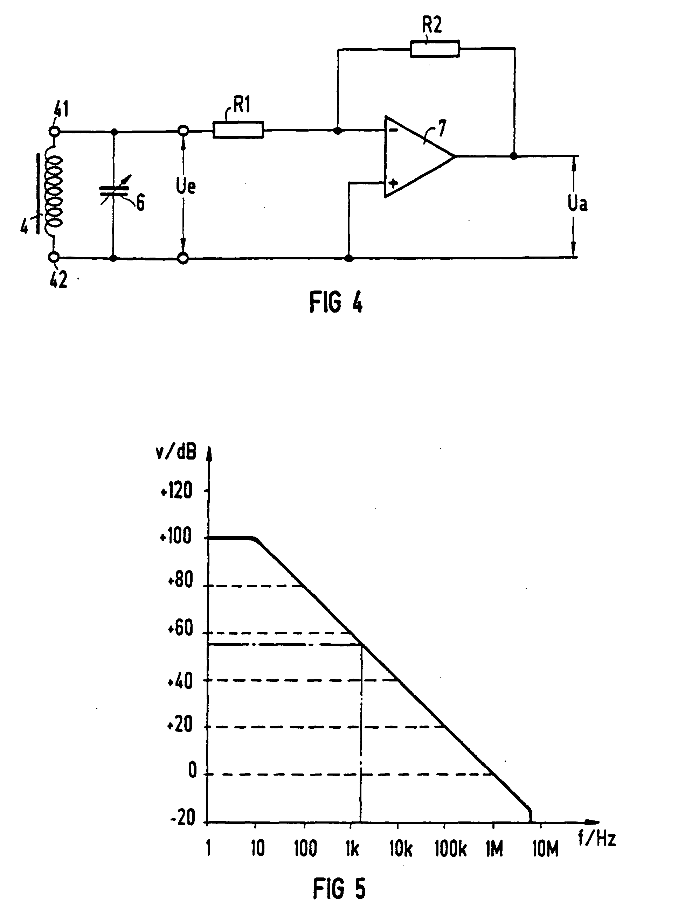

FIG 2 zeigt in einer radialen Draufsicht den Kunststoff-Tragkörper 3 der gemäß FIG 1 mittels einer axialen Führungsnut am Motorgehäuse 11 geführt einschiebbar und mittels endseitiger Rasthaken an den Stirnkanten des Motorgehäuses 11 in seiner Betriebsendlage fixierbar ist. Von der in den Kunststoff-Tragkörper 3 eingebetteten Meßspule 4 führen äußere Anschlußleitungen 41,42 zu der in FIG 4 dargestellten und später erläuterten weiteren Schaltung zur Ermittlung der in der Meßspule induzierten Drehfrequenz.

FIG 3 zeigt in Alternativausführung zu FIG 1,2 die Anordnung einer einen Induktions-Eisenkern 5 umgebenden Meßspule 4 in einem außerhalb des Motorgehäuses 11 angeordneten Kunststoff-Tragkörper 3 in der Nähe der rechten Polkante des Magnetsegmentes 13; in diesem Fall ist auch zwischen den oberen Stirnkanten der Magnetsegmente 12, 13 lediglich eine Steckfeder 14 eingedrückt.

Ausgehend von der Erkenntnis, daß das Streufeld in den Pollücken zwischen den Einzelpolen bzw. den Magnetsegmenten bzw. auch außerhalb des Motorgehäuses in dessen Nähe eine bei Drehung des Rotors zahn- bzw. nutfrequente Pulsation in der radial gerichteten Induktionsdichte aufweist, kann aus dem bei Rotation des Rotors an den Wicklungsanschlüssen 41 bzw.42 der Meßspule 4 anstehenden induzierten Spannungssignal trotz darin enthaltener hochfrequenter, insbesondere durch das Kommutatorfeuer des Gleichstrommotors verursachter, Störimpulse dadurch auf einfache Weise ein eindeutiges drehzahlproportionales Signal abgeleitet werden, daß gemäß FIG 4 die Meßspule 4 mit Induktions-Eisenkern als Teil eines Reihenschwingkreises 4;6 einbezogen und durch Abstimmung, z.B. durch Veränderung der Kapazität seines Kondensators 6, auf die zu messende Drehfrequenz des Rotors 2 zunächst ein diese Drehfrequenz enthaltender Frequenzbereich bei gleichzeitiger Abschwächung sämtlicher übriger Frequenzbereiche ausgefiltert und dann in Form einer Eingangsspannung Ue an eine nachgeschaltete Verstärkerschaltung mit einem Operationsverstärker 7 mit Widerstandsgegenkopplung weitergegeben wird, dessen Verstärkung v durch das Widerstandsverhältnis R2/R1 derart gewählt ist, daß die oberhalb der zu messenden Drehfrequenz liegenden höherfrequenten Störfrequenzen, insbesondere die aufgrund eines Kommutatorfeuers typischen hochfrequenten Störimpulse, in der Ausgangsspannung Ua wesentlich geringer verstärkt und somit relativ geschwächt sind.

Im vorliegenden Verstärkungsbeispiel gemäß FIG 5 werden bei einem Verstärkungsverhältnis von ca. 55 dB das in der Induktionsspule 4 mit Induktions-Eisenkern induzierte, der Drehfrequenz proportionale Meßsignal wegen seiner relativ niedrigen Frequenz von ca. 200 bis 1500 Hz deutlich verstärkt, während die, insbesondere durch das Kommutatorfeuer hervorgerufenen, hochfrequenten Störimpulse, deren Frequenz oberhalb 5000 Hz liegt, stark abgeschwächt sind.

Die Frequenz der am Ausgang des Operationsverstärkers 7 anstehenden Ausgangsspannung Ua ist direkt proportional zur Drehzahl n (U/min) des Gleichstrommotors 1 und kann durch einfache Umrechung, z.B. von einem Frequenzzähler, nach folgender Beziehung gemessen bzw. angezeigt werden:
Drehzahl: n (U/min) = 60/z x f;
f = Drehfrequenz aus Ua
z = Nuten- bzw. Zahnzahl des Rotor

## Patentansprüche

1. Drehzahlerfassungsvorrichtung für einen Gleichstrommotor (1) mit einem über seinen Umfang genuteten und/oder gezahnten Rotor (2) sowie mit einer durch die Drehung des Rotors (2) nutfrequente Pulsation des Streufeldes induzierbaren Meßspule (4), **dadurch gekennzeichnet**, daß die Meßspule (4) mittelbar oder unmittelbar Teil eines auf die Drehfrequenz des Rotors (2) abgestimmten Reihenschwingkreises (Meßspule 4, Kondensator 6) ist, dem ein Operationsverstärker (7) mit durch eine Widerstandsgegenkopplung (R2/R1) festlegbaren Verstärkung (v) im Sinne einer maximalen Verstärkung des die in der Meßspule (4) induzierten Drehfrequenz umfassenden Drehzahlbereichs sowie Schweichung der durch das Kommutatorfeuer des Gleichstrommotors hervorgerufenen Störimpulse nachgeschaltet ist.

2. Drehzahlerfassungsvorrichtung nach Anspruch 1, **gekennzeichnet durch** eine außerhalb des Gleichstrommotors (1) angeordnete Meßspule (4).

3. Drehzahlerfassungsvorrichtung nach Anspruch 2, **gekennzeichnet durch** eine außerhalb des Gleichstrommotors (1) im Bereich der statorseitigen Polkanten angeordnete Meßspule (4).

4. Drehzahlerfassungsvorrichtung nach einem der Ansprüche 1-3, **gekennzeichnet durch** einen statorseitig permanenterregten (Magnetsegmente 12, 13) Gleichstrommotor (1).

## Claims

1. Rotation speed detection device for a DC motor (1) having a rotor (2) which is slotted and/or toothed over its circumference, and having a measurement coil (4) in which a slot-frequency pulsation of the stray field can be induced by the rotation of the rotor (2), characterized in that the measurement coil (4) is indirectly or directly part of a series tuned circuit (measurement coil 4, capacitor 6) which is tuned to the rotation frequency of the rotor (2) and downstream of which an operational amplifier (7) is connected having a gain (v) which can be fixed by means of a resistor feedback path (R2/R1) in the sense of maximum gain for the rotation speed range covering the rotation frequency induced in the measurement coil (4), and attenuating the interference pulses caused by the commutator sparking of the DC motor.

2. Rotation speed detection device according to Claim 1, characterized by a measurement coil (4) arranged outside the DC motor (1).

3. Rotation speed detection device according to Claim 2, characterized by a measurement coil (4) arranged outside the DC motor (1) in the region of the pole edges on the stator side.

4. Rotation speed detection device according to one of Claims 1-3, characterized by a DC motor (1) which is excited by permanent magnets (magnet segments 12, 13) on the stator side.

## Revendications

1. Dispositif de détection de la vitesse de rotation pour un moteur (1) à courant continu, comportant un rotor (2) rainuré et/ou denté sur son pourtour ainsi que comportant une bobine (4) de mesure pouvant être induite par pulsation du champ de dispersion à la fréquence de denture lors de la rotation du rotor (2), caractérisé en ce que la bobine (4) de mesure fait partie directement ou indirectement d'un circuit oscillant série (bobine 4 de mesure, condensateur 6) qui est accordé à la fréquence de rotation du rotor (2) et en aval duquel est monté un amplificateur (7) opérationnel ayant un gain (v) pouvant être fixé par une contre-réaction (R2/R1) de résistance en vue d'une amplification maximum de l'intervalle de vitesse de rotation comprenant la fréquence de rotation induite dans la bobine (4) de mesure, ainsi qu'en vue d'une atténuation des impulsions parasites provoquées par le flash collecteur du moteur à courant continu.

2. Dispositif de détection de vitesse de rotation, caractérisé par une bobine (4) de mesure montée à l'extérieur du moteur (1) à courant continu.

3. Dispositif de détection de vitesse de rotation suivant la revendication 2, caractérisé par une bobine (4) de mesure montée à l'extérieur du moteur (1) à courant continu, dans la zone des cornes polaires situées côté stator.

4. Dispositif de détection de vitesse de rotation suivant l'une des revendications 1 à 3, caractérisé par un moteur (1) à courant continu situé côté stator excité en permanence (segments 12, 13 d'aimants).
